# EUROPEAN PATENT SPECIFICATION

(11) **EP 2 532 910 B1**
(45) Date of publication and mention of the grant of the patent: **21.08.2013**
(21) Application number: 11004762.8
(22) Date of filing: 10.06.2011
(51) Int. Cl.: F16D 23/12, F16D 25/0638, F16D 7/02

(54) **Friction clutch**
Reibungskupplung
Embrayage à friction

(43) Date of publication of application: 12.12.2012
(73) Proprietor: Hoerbiger Drivetrain Mechatronics B.V.B.A., 8210 Loppem (BE)
(72) Inventor: De Mazière, Filip, 9070 Heusden (BE); Genouw, Didier, 8480 Eernegem (BE)
(74) Representative: Prinz & Partner

(56) References cited:
- WO-A1-2005/042997
- DE-A1- 10 205 411
- US-A- 2 700 444

## Description

The invention relates to a friction clutch, for a vehicle or for any other industrial equipment, comprising at least one clutch disc and a compression plate, an activation spring having a first position in which the activation spring is disengaged from the compression plate and a second position in which the activation spring biases the compression plate against the clutch disc, and a bistable positioning mechanism which is adapted to hold the activation spring in the first position.

Generally friction clutches are known in two categories, namely normally open clutches which require external force to be held in a closed position, and normally closed clutches which require external force to be held in an open position. In order to avoid a continuous external force applied to the clutch, clutches with bistable positioning mechanisms are known for example from DE 102 35 906 A1 and DE 10 2008 013 054 B4. However such bistable positioning mechanisms have a complex activation mechanism and require a lot of space. A further clutch is known from DE-A-102 05 411.

The object of the invention is to provide a friction clutch, in particular for vehicles, with a compact bistable positioning mechanism and with a simple activation mechanism.

This object is achieved by a friction clutch, in particular for a vehicle, comprising at least one clutch disc and a compression plate, an activation spring having a first position in which the activation spring is disengaged from the compression plate and a second position in which the activation spring biases the compression plate against the clutch disc, and a bistable positioning mechanism adapted for holding the activation spring in the first position, the bistable positioning mechanism having a first and a second configuration in which the bistable positioning mechanism has different axial lengths, the bistable positioning mechanism comprising: a cog sleeve having a plurality of corrugations and a cam sleeve having at least one cam surface, wherein the cog sleeve has a fixed position in axial direction and the cam sleeve has first and second sets of indentations in the cam surface at different positions in axial direction in which the plurality of corrugations of the cog sleeve can be form-fittingly received, and a switching sleeve having a plurality of switching corrugations, wherein the switching sleeve is movable in axial direction and an axial movement of the switching sleeve pushes the switching corrugations of the switching sleeve against the cam surface of the cam sleeve, causing a relative movement in axial and circumferential direction between the cam sleeve and the cog sleeve, moving the corrugations of the cog sleeve between the first and second set of cam surface sections. Further, a simple actuation by a pushing movement in a single direction only is possible, allowing to use a simple hydraulic or pneumatic control system with e.g. just one piston and one proportional solenoid.

Due to the bistable positioning mechanism, the clutch only requires external forces during the switching operations. No external forces are required while the clutch is in its open or closed configuration. Due to the design of the bistable positioning mechanism components as sleeves, the mechanism can easily be incorporated into clutches of various designs without additional packaging requirements.

In order to create the necessary force on the cam sleeve to make it rotate while switching, a bias spring may is provided which biases the cam sleeve against the cog sleeve.

In a simple design of the bistable positioning mechanism, the cam sleeve can rotate relative to the clutch in order to allow the relative movement.

It is possible that one common cam surface or separate cam surfaces in radial direction are provided for the corrugations of the cog sleeve and switching sleeve respectively. This allows different designs of the bistable positioning mechanism that can be easily adapted to different packaging requirements.

It is also possible that the corrugations of switching sleeve and cog sleeve are provided at the same radius or at different radial positions.

In a normally open design, a simple mechanical disengagement of the activation spring can be achieved if a spring endstop is provided which is positioned so that in the open configuration of the clutch the activation spring rests against the spring endstop. The spring endstop can be formed on or connected to the switching sleeve. The spring endstop is formed on or connected to the actuating member or the switching sleeve. By way of example, the activation spring may be supported by the actuating member.

An actuating member, preferentially a piston or a thrust bearing, may be provided, to which an outside force may be applied in order to actuate a movement of the actuating member in axial direction, wherein the switching sleeve is connected to the actuating member to transmit the movement in axial direction. This preferably allows the incorporation of the bistable positioning mechanism in a large variety of actuating mechanisms.

According to a preferred embodiment of the invention, the cam sleeve is rotatingly arranged on the actuating member and an axial movement of the cam sleeve relative to the actuating member is limited by a blocking member.

In order to achieve adaptable torque transmission in the clutch, the force acting on the compression plate increases with increasing force on the activation member. Alternatively, the mechanism can be designed so that the force acting on the compression plate decreases with increasing force on the activation member.

Other details and features of the invention will be apparent from the following description of several embodiments of the invention, with reference to the attached drawings, where;
- Figure 1 is a section of a friction clutch according to a first embodiment of the invention in open configuration;
- Figure 2 is a section of the clutch of Figure 1 during a switching operation;
- Figure 3 is a section of the clutch of Figure 1 in closed configuration;
- Figure 4 shows the bistable positioning mechanism according the first embodiment in the closed configuration;
- Figure 5 shows the bistable positioning mechanism according the first embodiment in the open configuration;
- Figure 6 a and Figure 6 b show a detailed view of the bistable positioning mechanism according the first embodiment during switching operations;
- Figure 7 is a perspective view of the clutch,
- Figure 8 is a section of a friction clutch according to a second embodiment of the invention in closed configuration;
- Figure 9 is a section of the bistable positioning mechanism of the friction clutch of Figure 8;
- Figure 10 is a section of a friction clutch according to a third embodiment of the invention in closed configuration;
- Figure 11 is a section of the cutch of Figure 10 in open configuration;
- Figure 12 is a perspective view of the bistable positioning mechanism according to the third embodiment of the invention, with the clutch in the open configuration;
- Figure 13 is a section of a friction clutch according to a fourth embodiment of the invention in closed configuration; and
- Figure 14 is a section of the bistable positioning mechanism according to the embodiment of Figure 13.

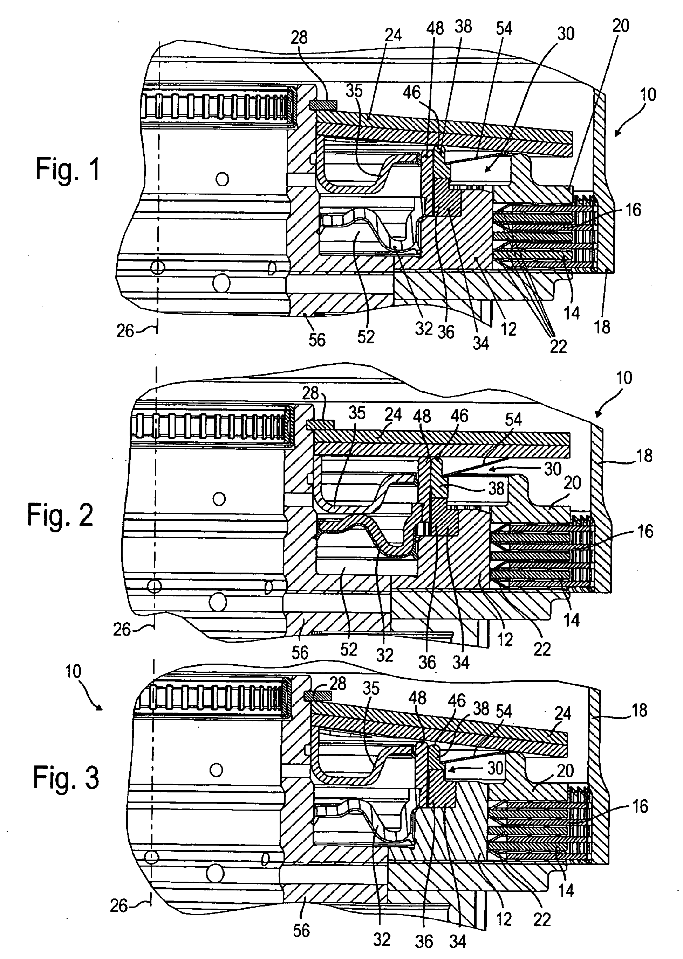

Figures 1 to 3 show sections of a friction clutch 10 comprising a clutch hub 12 connected to a first set of clutch discs 14. A second set of clutch discs 16 is connected to a clutch drum 18. A compression plate 20 is provided to compress the stack of first and second clutch discs 14, 16, wherein the friction between the clutch discs 14, 16 allows transmission of the torque between the clutch hub 12 and the clutch drum 18. The entire clutch rotates around axis 26.

Optional separator springs 22 are arranged between the clutch discs 14, 16 in order to push the clutch discs 14, 16 apart if the force exerted by the compression plate 20 is reduced, thereby opening the friction clutch 10.

An activation spring 24 is provided having a first position in which the activation spring 24 is disengaged from the compression plate 20 (shown in Figure 1) and a second position in which the activation spring 24 biases the compression plate 20 against the clutch discs 14, 16 (shown in Figure 3). The shown activation spring is formed as a double disc spring, but in general single or multiple disc springs in serial or in parallel can be mounted. In the first embodiment the activation spring rests against a blocking member 28 which is axially fixed in position relative to the friction clutch 10.

A bistable positioning mechanism 30 is provided which allows switching the activation spring 24 between the first and second positions. The bistable positioning mechanism 30 can be actuated by applying a pressure to a pressure chamber 52 delimited by a hydraulic piston 32 and a closure member 35. The clutch torque can be controlled and the clutch can be switched to zero torque or to max torque capacity, all by the same pressure in area 52. When the clutch is closed, no pressure is needed to keep it closed. To vary the torque capacity, a certain pressure in the same area 52 is applied. This way the clutch torque capacity can be controlled between max capacity and zero and vice versa. When the clutch has to be open for a while, the pressure in the same area 52 is increased further until the bistable positioning mechanism switches to the open position. Thereafter, the pressure in area 52 may be released. In order to regain torque capacity, the pressure in the area 52 is increased to the max pressure until the bistable positioning mechanism switches again, and the torque can be controlled freely between zero and max capacity. Once the max clutch capacity has to be maintained for a while, the pressure in area 52 is removed. This way, both the clutch torque and the bistable positioning mechanism are controlled by the pressure in area 52.

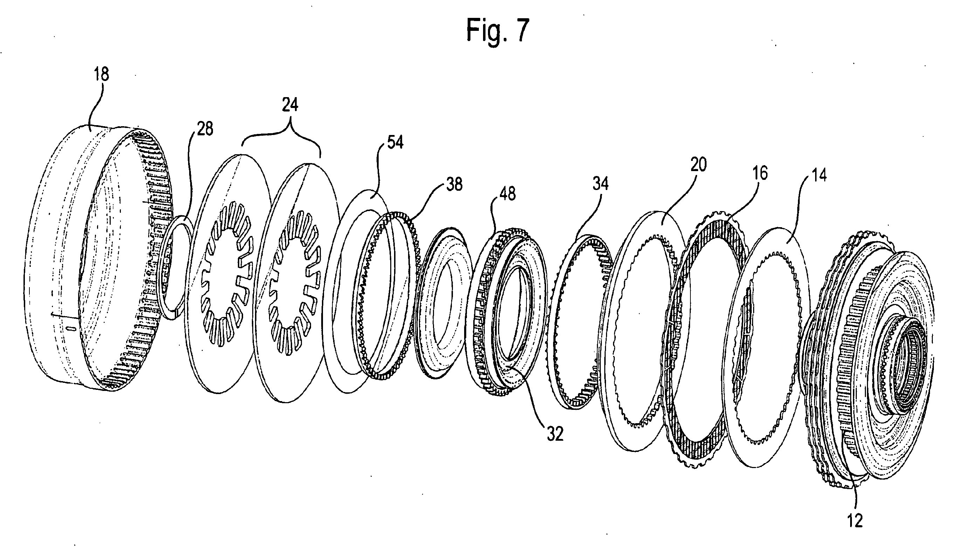

In the first embodiment shown in Figures 1 to 7, the bistable positioning mechanism 30 is actuated by an actuating mechanism in form of the hydraulic piston 32 forming an actuating member.

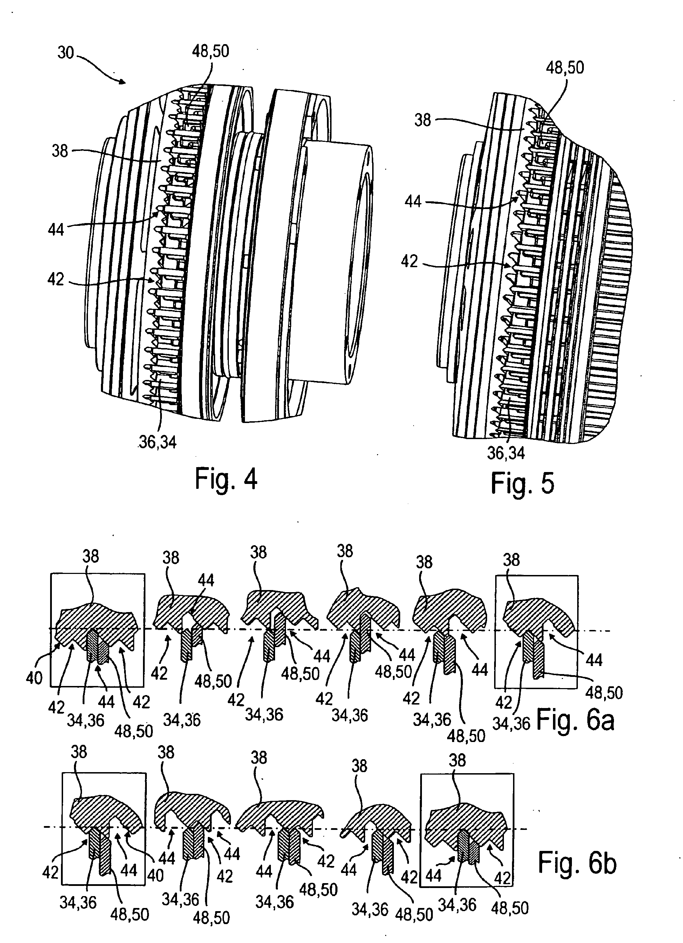

The bistable positioning mechanism has two stable configurations shown in Figures 4 and 5, in which the bistable positioning mechanism 30 has different lengths in the direction of the axis 26.

The bistable positioning mechanism 30 comprises a cog sleeve 34 having a plurality of corrugations 36, a cam sleeve 38 having a cam surface 40 and a switching sleeve 48.

The cog sleeve 34 has a fixed position in axial direction relative to the hub 12 of the friction clutch 10. In the first embodiment the cog sleeve 34 rests against the clutch hub 12. The cog sleeve 34 may also be fastened to the clutch hub 12 for example by welding or brazing, or may be an integral part of the clutch hub 12.

The cam sleeve 38 has first and second sets of indentations 42, 44 in the cam surface 40 at different positions in axial direction. The plurality of corrugations 36 of the cog sleeve 34 can be form-fittingly received in the first and second set of indentations 42, 44. If the corrugations 36 of the cog sleeve 34 are received in the first, "shallower" indentations 42 (see Figure 1 and Figure 5) the axial length of the combined assembly of cog sleeve 34 and cam sleeve 38 is longer than if the corrugations 36 of the cog sleeve 34 are received in the second, "deeper" indentations 44 (see Figure 3 and Figure 4).

Figure 1 shows the friction clutch 10 in open configuration. In this configuration, the activation spring 24 is in its first position in which it is disengaged from the compression plate 20. The bistable positioning mechanism is in its first configuration (Figure 5) in which the corrugations 36 of the cog sleeve 34 are form-fittingly received in the first, "shallow" set of indentations 42 in the cam surface 40 of the cam sleeve 38. In this configuration, the bistable positioning mechanism 30 has a first, longer extension in axial direction.

In the first configuration the bistable positioning mechanism positions a spring endstop 46 so that it presses against the activation spring 24 and the activation spring in turn against blocking member 28, causing the activation spring 24 to disengage the compression plate 20 and releasing the friction clutch into its open configuration. In the first embodiment, the spring endstop 46 is formed on the cam sleeve 38.

In the closed configuration of the friction clutch 10 shown in Figure 3, the bistable positioning mechanism 30 is in its second configuration (Figure 4) in which the corrugations 36 of the cog sleeve 34 are form-fittingly received in the second, "deep" set of indentations 44 in the cam surface 40 of the cam sleeve38. In this configuration, the extension of the bistable positioning mechanism 30 in axial direction is reduced compared to the first configuration, and the spring endstop 46 does not contact the activation spring 24 as it is now located closer to clutch hub 12. The activation spring 24 is therefore engaged with the compression plate 20, compressing the stack of clutch discs 14, 16 as the inner diameter of the activation spring still rests at blocking member 28.

In order to switch the bistable positioning mechanism 30 from its first to its second configuration, the switching sleeve 48 is used which has a plurality of switching corrugations 50. The switching sleeve 48 is connected to the actuating member 32 and is movable in axial direction. An axial moving of the switching sleeve 48 pushes the switching corrugations 50 of the switching sleeve 48 against the cam surface 40 of the cam sleeve 38, generating a relative movement of the cam sleeve 38 in axial and circumferential direction, changing the contact between the cam sleeve 38 with the cog sleeve 34 from indentation 42 to 44.

In a similar way, to switch the bistable positioning mechanism 30 from its second to its first configuration, the cam sleeve 38 moves further in the same circumferential direction and the contact between the cam sleeve 38 with the cog sleeve 34 changes from indentation 44 to 42.

In the first embodiment, the actuating member 32 is a hydraulic piston. If pressure is applied in a pressure chamber 52, the actuating member 32 and the switching sleeve 48 move in axial direction from an initial configuration (Figures 1 and 3) into the position as shown in Figure 2. During this switching operation the switching corrugations 50 of the switching sleeve 48 engage the cam surface 40 of the cam sleeve 38 actuating a relative movement of the cam sleeve 38 in axial and circumferential direction as can be seen in Figure 2.

A bias spring 54 is provided which biases the cam sleeve 38 against the cog sleeve 34. This bias spring 54 provides the necessary force on the cam sleeve 34 to make it rotate while switching. The surfaces 40 of the cam sleeve 38, the surfaces of the cog sleeve 34 and the surfaces of the switching sleeve 48 are slanted in such a way that the cam sleeve 38 will rotate by the axial force of the bias spring 54. The switching sleeve 48 is guided by the flanks of the cog sleeve 34 so that the switching sleeve 48 only can move axially and not tangentially.

An oil distributor 56 is provided in the center of the friction clutch 10 which allows lubrication of the friction clutch and the bistable positioning mechanism 30 and allows the pressurization and depressurization of the pressure chamber 52.

Figures 4 and 5 show partial views of the bistable positioning mechanism 30 in the closed and open configurations of the friction clutch 10, corresponding to Figures 3 and 1 respectively. In these views, the corrugations 36 of the cog sleeve 34 are shown which are interconnected radially further outwards, forming a ringshaped sleeve. The switching corrugations 50 of the switching sleeve 48 are arranged in between neighboring corrugations 36 of the cog sleeve 34.

In Figure 4, the corrugations 36 of the cog sleeve 34 are form-fittingly engaged in the second, "deep" set of indentations 44 in the cam surface 40 of the cam sleeve 38.

In Figure 5, the corrugations 46 of the cog sleeve 34 are form-fittingly engaged in the first, "shallow" set of indentations 42 in the cam surface 40 of the cam sleeve 38.

The cog sleeve 34, the cam sleeve 38 and the switching sleeve 48 all have a rotational symmetry with the symmetry axis corresponding to the axis 26.

The relative movements of the cog sleeve 34, the cam sleeve 38 and the switching sleeve 48 during switching operation of the bistable positioning mechanism 30 is shown in Figures 6a and 6b. The Figures show a single corrugation 36 of the cog sleeve 34 together with a neighboring switching corrugation 50 of the switching sleeve 48 and the cam sleeve 38 with the cam surface 40.

Figure 6a shows the switching operation from the stable closed configuration (with the switching mechanism being in the axially shorter configuration) to the stable open configuration (with the switching mechanism being in the axially longer configuration) of the friction clutch 10. The first picture on the left of Figure 6a shows the corrugations 36 of the cog sleeve 34 form-fittingly received in one of the second indentations 44 in the cam surface 40 of the cam sleeve 38. The switching corrugation 50 of the switching sleeve 48 is positioned in axial direction so as to contact the cam surface 40 of the cam sleeve 38.

The dashed line indicates the axial position of the corrugations 36 of the cog sleeve 34 which is fixed relative to the housing of the friction clutch 10.

Next, the switching sleeve 48 is moved further in axial direction, pressing the switching corrugation 50 against the cam surface 40 and actuating an axial movement of the cam sleeve 38. The corrugations 36 of the cog sleeve 34 remains within the second indentation 44, preventing a circumferential movement of the cam sleeve 38 at this stage.

Once the switching corrugations 50 of the switching sleeve 48 have moved the cam sleeve 38 in axial direction to a point where the corrugations 36 of the cog sleeve 34 disengage from the second indentations 44, a circumferential movement of the cam sleeve 38 takes place until the switching corrugation 50 lies within the second set of indentations 44.

At this point, the switching corrugations 50 are moved back in axial direction, allowing the cam sleeve 38 to move in axial and circumferential direction so as to receive the corrugations 36 of the cog sleeve 34 in the first set of indentations 42 as shown on the right most picture of Figure 6a, in which the friction clutch 10 is in its stable open configuration.

In Figure 6b, the corresponding switching operation is shown from the stable open, axially longer configuration to the stable closed, axially shorter configuration.

During both switching operations, both the cam sleeve 38 and the switching sleeve 48 are pushed axially by the piston 32 during the initial phase of the switching operation. The length of both the cam sleeve 38 and the switching sleeve 48 are designed so that only the switching sleeve 48 pushes against the activation spring 24. There is always a small gap between the activation spring 24 and the cam sleeve 38 so that the high force of the activation spring 24 is not loading the bistable positioning mechanism 30 while switching and so avoiding damaging the tops of the cogs 40, 36 and 50 while switching.

The relative rotational movement between the cam sleeve 38 and the cog sleeve 34 together with the switching sleeve 48 can be achieved only when the cam sleeve 38 is rotationally mounted relative to the clutch hub 12.

In the present embodiment, the cam sleeve 38 has one single cam surface 40 which contacts both the corrugations 36 of the cog sleeve 34 and the switching corrugations 50 of switching sleeve 48. The corrugations 36 of the cog sleeve 34 and the switching corrugations 50 of switching sleeve 48 are positioned at the same radius. It is also possible to arrange the corrugations 36 of the cog sleeve 34 and the switching corrugations 50 of switching sleeve 48 at different radial positions, and the cam sleeve 40 could have different cam surfaces 40 at different radial positions for the corrugations 36 of the cog sleeve 34 and the switching corrugations 50 of switching sleeve 48 respectively. This allows adapting the bistable positioning mechanism 30 to different packaging requirements in different friction clutch designs.

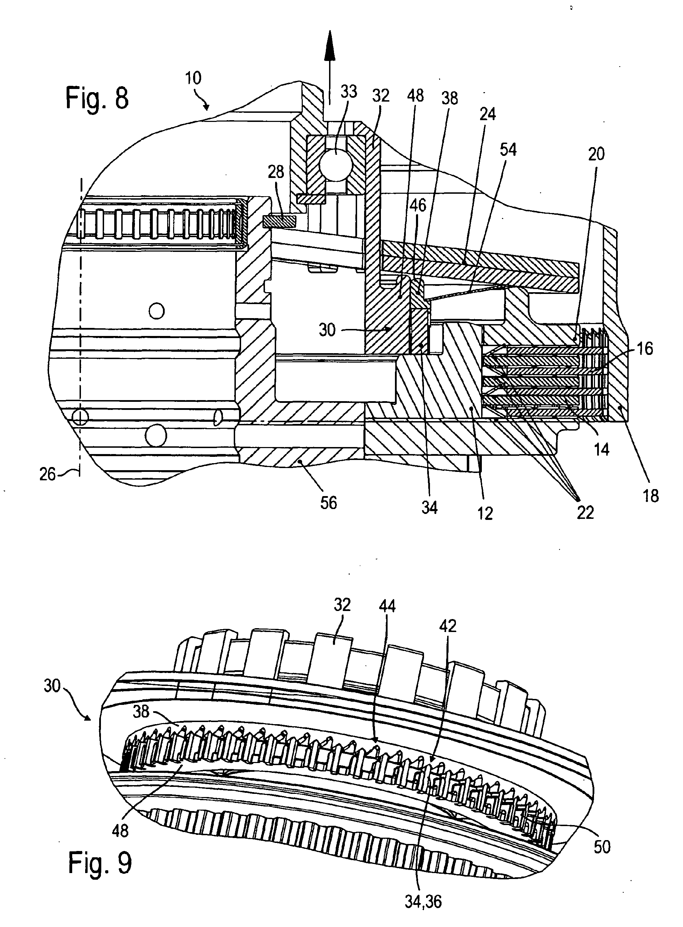

Figures 8 and 9 show a second embodiment of the friction clutch 10. The design and the function of the friction clutch 10 and the bistable positioning mechanism 30 are identical to the first embodiment with the exception of the actuating member 32. In the second embodiment, the actuating member 32 is part of or connected to a thrust bearing 33 which allows direct mechanical movement of the switching sleeve 48 which is integrally connected to the actuating member 32. The actuating member 32 has arms which extend from the switching sleeve in axial direction through cutouts in the activation spring 24. In this configuration, the thrust bearing 33 can be actuated by a non rotating piston. Rotating pistons do require piston rings for sealing the oil pressure when passing from the stationary housing to the rotating piston and so hydraulic pressure is leaking. The advantage of a stationary piston is that no hydraulic energy is lost by oil leaking over the piston rings.

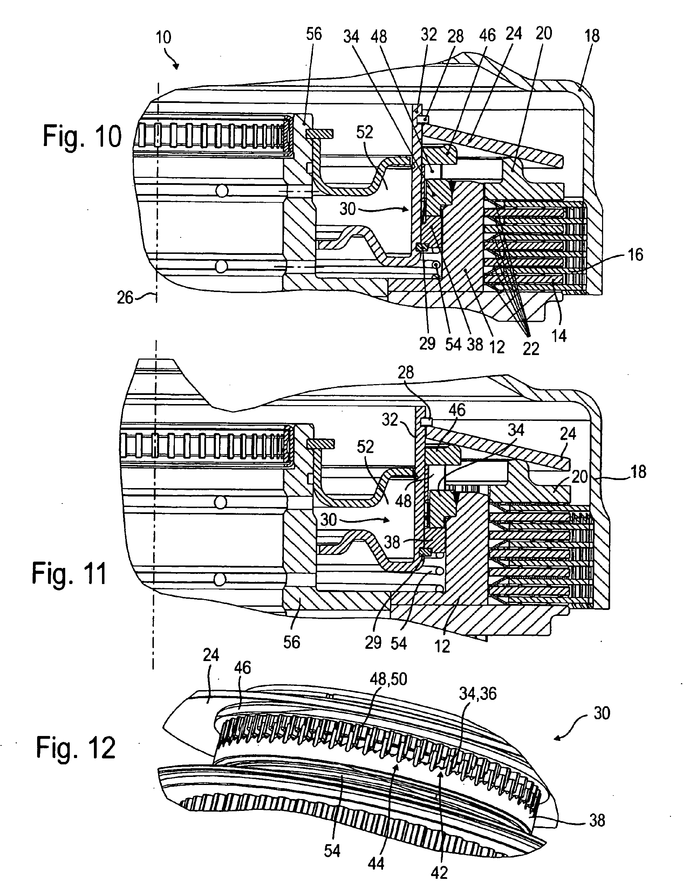

Figures 10, 11 and 12 show a third embodiment of the friction clutch 10 with a modified bistable positioning mechanism 30 and actuation member 32.

The actuation member 32 is a piston which can be moved in axial direction if pressure is applied to a pressure chamber 52. The actuation member 32 serves as a support for the activation spring 24 which rests against a blocking member 28 defining an axial position of the activation spring 24 relative to the actuation member 32. The activation spring is therefore moveable in axial direction together with the actuation member 32.

The actuation member 32 further supports the switching sleeve 48 and the spring endstop 46 which are directly or indirectly connected to the actuation member 32 to be at a fixed axial and tangential position relative to the actuation member 32.

The cog sleeve 34 is fastened to the clutch hub 12 so as to be fixed in axial position relative to the clutch housing.

The cam sleeve 38 is rotationally arranged on the actuating member 32, and an axial movement of the cam sleeve 38 relative to the actuating member 32 is limited by a blocking member 29.

The cog sleeve 34, the cam sleeve 38 and the switching sleeve 48 are of similar design to the first embodiment; however their arrangement in axial direction is essentially reversed.

A bias spring 54 is provided between the clutch hub 12 and the cam sleeve 38 and biases the cam sleeve 38 against the cog sleeve 34 or against the switching sleeve 48.

Figure 10 shows the friction clutch 10 in its closed configuration with the activation spring in the second position. In this configuration, the corrugations 36 of the cog sleeve 34 are received in the "shallow" set of indentations 42 of the cam surface 40 of the cam sleeve 38. The assembly of the cog sleeve 34 is therefore in its axially longer configuration.

The axial position of the actuating member 32 is defined by the axial position of the cam sleeve 38 which abuts cog sleeve 34 and at which the associated stopper member 29 rests. In this position of the actuating member 32, the activation spring 24, with its inner circumference, rests against stopper member 28, and presses against compression plate 20. Spring endstop 46 does not contact activation spring 24. The spring force acts on the clutch discs 14, 16.

During the switching operation, the pressure chamber 52 is pressurized and the piston of the actuating member 32 moves (in Figure 10) in axial direction. In this initial phase of the switching operation, the activation spring 24 is deformed and flattened, therefore increasing the force on the compression plate 20. During this initial phase, the clutch capacity of the closed clutch still increases, so that the clutch still remains closed.

The switching sleeve 48 moves together with the actuating member 32 and comes in contact with the cam sleeve 38, actuating a movement of the cam sleeve in axial and circumferential direction, moving the corrugations 36 of the cog sleeve 34 from the "shallow" set of indentations 42 to the "deep" set of indentations 44 in the cam surface 40 of the cam sleeve 38, resulting in the switching mechanism assuming its shorter configuration. While the actuating member 32 is moving, the gap between the cam sleeve 38 and the stopping member 29 is increasing, allowing the cam sleeve 38 to switch.

The relative movement between the switching sleeve 48, the cam sleeve 38 and the cog sleeve is essentially the same as described in the first embodiment.

As the pressure in the pressure chamber 52 is released, the actuating member 32 moves in axial direction until the stopper member 29 rests against the cam sleeve 38. During this phase the torque capacity of the clutch 10 decreases together with the decreasing activation pressure in room 52. Therefore this third embodiment is a clutch with a positive slope of torque versus pressure in contrast with the first embodiment which is a clutch with a negative slope of torque versus pressure.

The open configuration is shown in Figures 11 and 12. Since the assembly of the cog sleeve 34 and the cam sleeve 38 has a shorter axial length in this configuration, the actuation member 32 is positioned at a different axial position farther from the clutch hub 12 than in the previous configuration shown in Figure 10. In the configuration of Figures 11 and 12, the activation spring 24 is held by means of the spring endstop 46. In other words, in the open configuration actuation member 32 is allowed to move so far in the axial direction that activation spring 24 is allowed to relax and assume a more conical shape until it abuts at spring endstop 46 so that the spring force acts only between blocking member 28 and spring endstop 46 rather than between blocking member 28 and compression plate 20. In this condition, the activation spring 24 does not exert a force on compression plate 20, resulting in the clutch being in an open condition. Only separator springs 22 are the cause for compression plate 20 still contacting activation spring 24.

All other features of the friction clutch 10 are similar to the first embodiment.

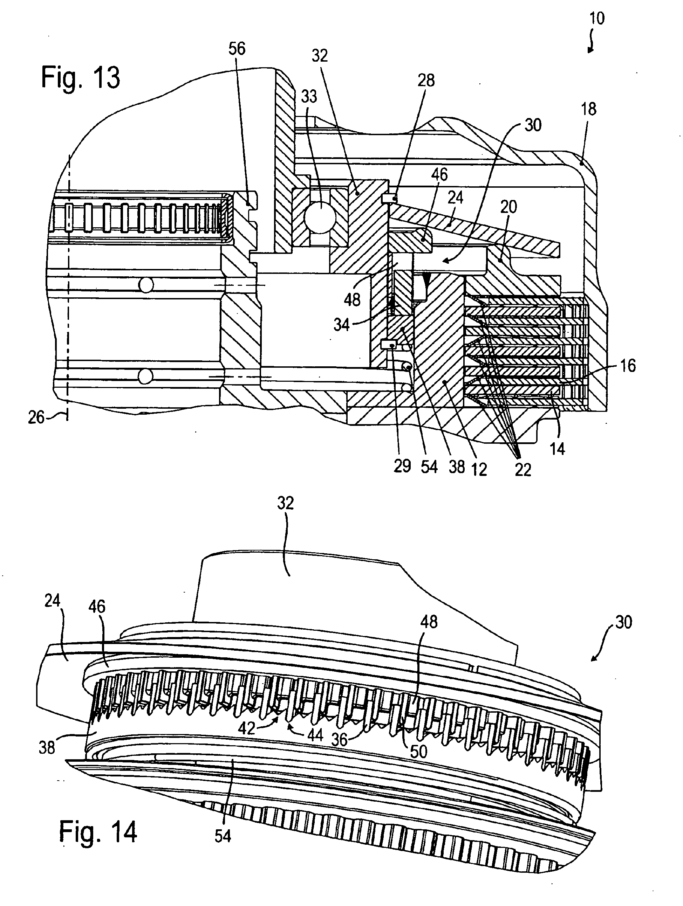

Figures 13 and 14 show a fourth embodiment of the friction clutch 10 in its closed configuration. The design and the function of the friction clutch 10 and the bistable positioning mechanism 30 are identical to the third embodiment with the exception of the actuating member 32. In the fourth embodiment, the actuating member 32 is part of or connected to a thrust bearing 33 which allows direct mechanical movement actuating member 32 with the same characteristics as described for the second embodiment.

## Claims

1. A friction clutch (10) for a vehicle comprising
at least one clutch disc (14, 16) and a compression plate (20),
an activation spring (24) having a first position in which the activation spring (24) is disengaged from the compression plate (20) and a second position in which the activation spring (24) biases the compression plate (20) against the clutch disc (14, 16), and
a bistable positioning mechanism (30) adapted for holding the activation spring (24) in the first position,
the bistable positioning mechanism (30) having a first and a second configuration in which the bistable positioning mechanism (30) has different lengths in axial direction, the bistable positioning mechanism (30) comprising:
a cog sleeve (34) having a plurality of corrugations (36) and a cam sleeve (38) having at least one cam surface (40), wherein the cog sleeve (34) has a fixed position in axial direction and the cam sleeve (38) has first and second sets of indentations (42, 44) in the cam surface (40) at different positions in axial direction in which the plurality of corrugations (36) of the cog sleeve (34) can be form-fittingly received, and
a switching sleeve (48) having a plurality of switching corrugations (50), wherein the switching sleeve (48) is movable in axial direction and an axial movement of the switching sleeve (48) pushes the switching corrugations (50) of the switching sleeve (48) against the cam surface (40) of the cam sleeve (38), actuating a relative movement in axial and circumferential direction between the cam sleeve (38) and the cog sleeve (34), moving the corrugations (36) of the cog sleeve (34) between the first and second set of cam surface sections (42, 44).

2. Friction clutch according to claim 1, wherein cog sleeve (34), cam sleeve (38) and switching sleeve (48) have a rotational symmetry axis along the axis (26) of expansion.

3. Friction clutch according to claim 1 or claim 2, where the bistable positioning mechanism (30) and the torque capacity of the clutch (10) can be controlled by a single pushing element which is actuated in a single direction.

4. Friction clutch according to any of claim 1 to 3, where the bistable positioning mechanism (30) is not loaded by the high force of the activation spring (24) during switching.

5. Friction clutch according to any of claims 1 to 3, wherein a bias spring (54) is provided which biases the cam sleeve (38) against the cog sleeve (34).

6. Friction clutch according to one of the previous claims, wherein the cam sleeve (38) can rotate relative to the clutch (10).

7. Friction clutch according to one of the previous claims, wherein one common cam surface (40) or separate cam surfaces (40) in radial direction are provided for the corrugations (36) of the cog sleeve (34) and switching sleeve (48) respectively.

8. Friction clutch according to one of the previous claims, wherein the corrugations (36, 50) of switching sleeve (48) and cog sleeve (34) are provided at the same radius or at different radial positions.

9. Friction clutch according to one of the previous claims, wherein a spring endstop (46) is provided which is positioned so that in the open configuration of the clutch the activation spring (24) rests against the spring endstop (46).

10. Friction clutch according to claim 9, wherein the spring endstop (46) is formed on or connected to the cam sleeve (38).

11. Friction clutch according to one of the previous claims, wherein an actuating member (32), preferentially a piston or a thrust bearing (33), is provided, to which an outside force may be applied in order to actuate a movement of the actuating member (32) in axial direction, wherein the switching sleeve (48) is connected to the actuating member (32) to transmit the movement in axial direction.

12. Friction clutch according to claim 11, wherein the spring endstop (46) is formed on or connected to the actuating member (32) or the switching sleeve (48).

13. Friction clutch according to claim 11 or 12, wherein the activation spring (24) is supported by the actuating member (32).

14. Friction clutch according to one of the claims 11 to 13, wherein the cam sleeve (38) is rotationally arranged on the actuating member (32) and an axial movement of the cam sleeve (38) relative to the actuating member (32) is limited by a blocking member (29).

15. Friction clutch according to one of the previous claims, wherein the force acting on the compression plate (20) increases with the axial force from the piston (32) or from a thrust bearing (30).

16. Friction clutch according to one of claims 1 to 14, wherein the force acting on the compression plate (20) decreases with the axial force from the piston (32) or from a thrust bearing (30).

## Patentansprüche

1. Reibungskupplung (10) für ein Fahrzeug, mit
wenigstens einer Kupplungsscheibe (14, 16) und einer Druckplatte (20),
einer Aktivierungsfeder (24), die eine erste Stellung, in der die Aktivierungsfeder (24) außer Eingriff mit der Druckplatte (20) ist, und eine zweite Stellung hat, in der die Aktivierungsfeder (24) die Druckplatte (20) gegen die Kupplungsscheibe (14, 16) beaufschlagt, und
einem bistabilen Stellmechanismus (30), der so ausgelegt ist, dass er die Aktivierungsfeder (24) in der ersten Stellung hält,
wobei der bistabile Stellmechanismus (30) eine erste und eine zweite Konfiguration hat, in denen der bistabile Stellmechanismus (30) in axialer Richtung unterschiedlich lang ist, wobei der bistabile Stellmechanismus (30) Folgendes umfasst:
eine Zahnbuchse (34) mit mehreren Riffelungen (36) und eine Nockenbuchse (38) mit wenigstens einer Nockenlaufbahn (40), wobei die Zahnbuchse (34) in axialer Richtung eine feste Position hat und die Nockenbuchse (38) in axialer Richtung an unterschiedlichen Positionen einen ersten und einen zweiten Satz Einkerbungen (42, 44) in der Nockenlaufbahn (40) hat, in denen die mehreren Riffelungen (36) der Zahnbuchse (34) formschlüssig aufgenommen sein können, und
eine Schaltbuchse (48) mit mehreren Schaltriffelungen (50), wobei die Schaltbuchse (48) in axialer Richtung beweglich ist und eine Axialbewegung der Schaltbuchse (48) die Schaltriffelungen (50) der Schaltbuchse (48) gegen die Nockenlaufbahn (40) der Nockenbuchse (38) drückt und dadurch in axialer und in Umfangsrichtung eine Relativbewegung zwischen der Nockenbuchse (38) und der Zahnbuchse (34) auslöst und die Riffelungen (36) der Zahnbuchse (34) zwischen dem ersten und dem zweiten Satz Nockenlaufbahnabschnitten (42, 44) verschiebt.

2. Reibungskupplung nach Anspruch 1, bei der die Zahnbuchse (34), die Nockenbuchse (38) und die Schaltbuchse (48) eine Rotationssymmetrieachse längs der Expansionsachse (26) haben.

3. Reibungskupplung nach Anspruch 1 oder Anspruch 2, bei der der bistabile Stellmechanismus (30) und die Drehmomentkapazität der Kupplung (10) von einem einzigen Schiebeelement gesteuert werden können, das in einer einzigen Richtung betätigt wird.

4. Reibungskupplung nach einem der Ansprüche 1 bis 3, bei der der bistabile Stellmechanismus (30) durch die hohe Kraft der Aktivierungsfeder (24) während des Schaltens nicht beansprucht wird.

5. Reibungskupplung nach einem der Ansprüche 1 bis 3, bei der eine Beaufschlagungsfeder (54) vorgesehen ist, die die Nockenbuchse (38) gegen die Zahnbuchse (34) beaufschlagt.

6. Reibungskupplung nach einem der vorherigen Ansprüche, bei der sich die Nockenbuchse (38) relativ zur Kupplung (10) drehen kann.

7. Reibungskupplung nach einem der vorherigen Ansprüche, bei der eine gemeinsame Nockenlaufbahn (40) oder getrennte Nockenlaufbahnen (40) in radialer Richtung für die Riffelungen (36) der Zahnbuchse (34) bzw. der Schaltbuchse (48) vorgesehen sind.

8. Reibungskupplung nach einem der vorherigen Ansprüche, bei der die Riffelungen (36, 50) der Schaltbuchse (48) und der Zahnbuchse (34) auf dem gleichen Radius oder an unterschiedlichen radialen Positionen vorgesehen sind.

9. Reibungskupplung nach einem der vorherigen Ansprüche, bei der ein Federendanschlag (46) vorgesehen ist, der so positioniert ist, dass in der offenen Konfiguration der Kupplung die Aktivierungsfeder (24) an dem Federendanschlag (46) anliegt.

10. Reibungskupplung nach Anspruch 9, bei der der Federendanschlag (46) an der Nockenbuchse (38) gebildet oder mit dieser verbunden ist.

11. Reibungskupplung nach einem der vorherigen Ansprüche, bei der ein Betätigungselement (32), vorzugsweise ein Kolben oder ein Axiallager (33), vorgesehen ist, auf das eine äußere Kraft aufgebracht werden kann, um eine Bewegung des Betätigungselements (32) in axialer Richtung auszulösen, wobei die Schaltbuchse (48) mit dem Betätigungselement (32) verbunden ist, um die Bewegung in axialer Richtung zu übertragen.

12. Reibungskupplung nach Anspruch 11, bei der der Federendanschlag (46) an dem Betätigungselement (32) oder der Schaltbuchse (48) gebildet oder damit verbunden ist.

13. Reibungskupplung nach Anspruch 11 oder 12, bei der die Aktivierungsfeder (24) von dem Betätigungselement (32) getragen ist.

14. Reibungskupplung nach einem der Ansprüche 11 bis 13, bei der die Nockenbuchse (38) drehbar an dem Betätigungselement (32) angeordnet ist und eine Axialbewegung der Nockenbuchse (38) relativ zum Betätigungselement (32) von einem Sperrelement (29) begrenzt ist.

15. Reibungskupplung nach einem der vorherigen Ansprüche, bei der die auf die Druckplatte (20) wirkende Kraft mit der Axialkraft vom Kolben (32) oder von einem Axiallager (30) zunimmt.

16. Reibungskupplung nach einem der Ansprüche 1 bis 14, bei der die auf die Druckplatte (20) wirkende Kraft mit der Axialkraft vom Kolben (32) oder von einem Axiallager (30) abnimmt.

## Revendications

1. Embrayage à friction (10) pour un véhicule, comportant
au moins un disque d'embrayage (14, 16) et une plaque de compression (20),
un ressort d'activation (24) ayant une première position dans laquelle le ressort d'activation (24) est dégagé de la plaque de compression (20), et une seconde position dans laquelle le ressort d'activation (24) sollicite la plaque de compression (20) contre le disque d'embrayage (14, 16), et
un mécanisme de positionnement (30) bistable adapté pour maintenir le ressort d'activation (24) dans la première position,
le mécanisme de positionnement (30) bistable ayant une première et une seconde configurations dans lesquelles le mécanisme de positionnement (30) bistable présente différentes longueurs en direction axiale, le mécanisme de positionnement (30) bistable comprenant :
un manchon cannelé (34) présentant une pluralité de cannelures (36) et un manchon de came (38) présentant au moins une surface de came (40), le manchon cannelé (34) ayant une position fixe en direction axiale et le manchon de came (38) ayant un premier et un second ensembles de creux (42, 44) dans la surface de came (40) dans des positions différentes en direction axiale dans lesquelles la pluralité de cannelures (36) du manchon cannelé (34) peuvent être reçues par coopération de formes, et
un manchon de changement de vitesse (48) présentant une pluralité de cannelures de changement de vitesse (50), le manchon de changement de vitesse (48) étant mobile en direction axiale, et un mouvement axial du manchon de changement de vitesse (48) poussant les cannelures de changement de vitesse (50) du manchon de changement de vitesse (48) contre la surface de came (40) du manchon de came (38), procurant un mouvement relatif dans la direction axiale et circonférentielle entre le manchon de came (38) et le manchon cannelé (34), ce qui fait déplacer les cannelures (36) du manchon cannelé (34) entre le premier et le second ensembles de sections de surface de came (42, 44).

2. Embrayage à friction selon la revendication 1, dans lequel le manchon cannelé (34), le manchon de came (38) et le manchon de changement de vitesse (48) présentent un axe à symétrie de révolution le long de l'axe d'extension (26).

3. Embrayage à friction selon la revendication 1 ou 2, dans lequel le mécanisme de positionnement (30) bistable et la capacité de couple de l'embrayage (10) sont susceptibles d'être contrôlés par un seul élément de poussée qui est actionné dans une seule direction.

4. Embrayage à friction selon l'une des revendications 1 à 3, dans lequel le mécanisme de positionnement (30) bistable n'est pas chargé par la force élevée du ressort d'activation (24) pendant le changement de rapport de vitesse.

5. Embrayage à friction selon l'une des revendications 1 à 3, dans lequel est prévu un ressort de précontrainte (54) qui sollicite le manchon de came (38) contre le manchon cannelé (34).

6. Embrayage à friction selon l'une des revendications précédentes, dans lequel le manchon de came (38) est capable de tourner par rapport à l'embrayage (10).

7. Embrayage à friction selon l'une des revendications précédentes, dans lequel une surface de came (40) commune ou des surfaces de came (40) séparées en direction radiale sont prévues pour les cannelures (36) du manchon cannelé (34) et du manchon de changement de vitesse (48), respectivement.

8. Embrayage à friction selon l'une des revendications précédentes, dans lequel les cannelures (36, 50) du manchon de changement de vitesse (48) et du manchon cannelé (34) sont prévues sur le même rayon ou dans des positions radiales différentes.

9. Embrayage à friction selon l'une des revendications précédentes, dans lequel est prévue une butée de ressort (46) qui est positionnée de telle sorte que dans la configuration ouverte de l'embrayage, le ressort d'activation (24) repose contre la butée de ressort (46).

10. Embrayage à friction selon la revendication 9, dans lequel la butée de ressort (46) est formée sur ou reliée au manchon de came (38).

11. Embrayage à friction selon l'une des revendications précédentes, dans lequel est prévu un organe d'actionnement (32), de préférence un piston ou un palier de roulement (33), susceptible d'être sollicité par une force extérieure en vue de procurer un mouvement en direction axiale de l'organe d'actionnement (32), le manchon de changement de vitesse (48) étant relié à l'organe d'actionnement (32) pour transmettre le mouvement en direction axiale.

12. Embrayage à friction selon la revendication 11, dans lequel la butée de ressort (46) est formée sur ou reliée à l'organe d'actionnement (32) ou le manchon de changement de vitesse (48).

13. Embrayage à friction selon la revendication 11 ou 12, dans lequel le ressort d'activation (24) est supporté par l'organe d'actionnement (32).

14. Embrayage à friction selon l'une des revendications 11 à 13, dans lequel le manchon de came (38) est disposé en rotation sur l'organe d'actionnement (32), et un mouvement axial du manchon de came (38) par rapport à l'organe d'actionnement (32) est limité par un organe de blocage (29).

15. Embrayage à friction selon l'une des revendications précédentes, dans lequel la force agissant sur la plaque de compression (20) augmente au fur et à mesure de la force axiale du piston (32) ou d'un palier de roulement (30).

16. Embrayage à friction selon l'une des revendications 1 à 14, dans lequel la force agissant sur la plaque de compression (20) diminue au fur et à mesure de la force axiale du piston (32) ou d'un palier de roulement (30).
